(19) Europäisches Patentamt / European Patent Office / Office européen des brevets

(11) **EP 2 808 669 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
**G01N 21/53** *(2006.01)* **G08B 17/107** *(2006.01)*
**G01N 15/14** *(2006.01)*

(21) Anmeldenummer: **13002810.3**

(22) Anmeldetag: **31.05.2013**

(54) **Vorrichtung zur Messung von Streulicht aus einem Messvolumen unter Kompensation von Hintergrundsignalen**

Device for measuring scattered light from a measurement volume with compensation for background signals

Dispositif de mesure de la lumière diffusée à partir d'un volume de mesure en compensant les signaux d'arrière-plan

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.12.2014 Patentblatt 2014/49**

(73) Patentinhaber: **Durag GmbH**
**22453 Hamburg (DE)**

(72) Erfinder: **Cierullies, Sven**
**21129 Hamburg (DE)**

(74) Vertreter: **Hauck Patentanwaltspartnerschaft mbB**
**Postfach 11 31 53**
**20431 Hamburg (DE)**

(56) Entgegenhaltungen:
**EP-A2- 0 360 126     EP-B1- 1 983 328**
**CH-A5- 600 456       US-A- 4 830 494**
**US-A1- 2011 255 087**

EP 2 808 669 B1

**Beschreibung**

Die Erfindung bezieht sich auf eine Vorrichtung zur Messung von Streulicht aus einem Messvolumen unter Kompensation von Hintergrundsignalen.

Die Streulichtmessung ist ein bekanntes und bewährtes Verfahren zur Bestimmung der Konzentration von Staub oder anderen Partikeln in gasförmigen Medien. Sie wird beispielsweise in der Emissionsmessung bei Feuerungsanlagen angewandt. Dabei wird von einem Messkopf aus ein Lichtstrahl in ein Messvolumen ausgesendet, welcher von den Partikeln zurückgestreut wird. Dieses Streulicht wird vom Messkopf detektiert und stellt ein Maß für die Partikelkonzentration im Messvolumen dar.

Bei der Streulichtmessung ist die gemessene Leistung des Streulichts sehr klein im Verhältnis zur eingestrahlten Leistung. Das vom Messkopf ausgesendete Licht erzeugt durch mehrfache Reflexionen und Streuungen in der Umgebung des Messvolumens Hintergrundlicht, das ebenfalls vom Messkopf detektiert wird. Deshalb liefert der Messkopf ein auf Streulicht aus dem Messvolumen beruhendes Messsignal und ein auf Hintergrundlicht beruhendes Hintergrundsignal. Die Stärke des Hintergrundsignals ist in der Größenordnung des Messsignals angesiedelt. Bei Messungen innerhalb eines Kamins oder eines anderen umschlossenen Raumes wird ein starkes Hintergrundsignal durch Reflexionen und Streuungen an der dem Messkopf gegenüberliegenden Wand (nachfolgend "Hintergrundwand" genannt) verursacht.

Bekannt ist, das Hintergrundlicht durch eine Lichtfalle zu unterdrücken, d.h. durch eine geeignete absorbierende Vorrichtung an der dem Messkopf gegenüberliegenden Hintergrundwand. Ferner ist bekannt, das Hintergrundlicht durch einen separaten Kontrollempfänger zu messen und rechnerisch zu kompensieren.

Die DE 27 54 139 A1 und CH 600 456 beschreiben einen Rauchdetektor, der von beiden Maßnahmen Gebrauch macht. Bei einer Ausführung sind zwei Strahlungsempfangseinheiten hinter einer einzigen Linse angeordnet. Die Gesichtsfelder der beiden Strahlungsempfangseinheiten haben ihren Fokus in zwei benachbarten Punkten, von denen einer innerhalb des Strahlungsbündels eines Lichtsenders liegt. Die beiden Gesichtsfelder überlappen einander teilweise auf der gegenüberliegenden Wand. Der Lichtsender ist senkrecht zur optischen Achse der Linse angeordnet. Infolge der nur teilweisen Überlappung der Gesichtsfelder ist keine vollständige Kompensation der Hintergrundstrahlung möglich, die der auf das Messvolumen ausgerichtete Lichtempfänger empfängt.

Die EP 1 983 328 B1 beschreibt eine Messvorrichtung zur Bestimmung einer Partikelkonzentration innerhalb eines Messbereichs, die ebenfalls mit einer Messeinheit mit einem Messempfänger für das Messsignal sowie einer Kontrolleinheit mit einem Kontrollempfänger arbeitet. Der Kontrollempfänger muss beim Einbau des Geräts so ausgerichtet werden, dass er den gleichen Hintergrund wie der Messempfänger betrachtet. Zur Justage der Messvorrichtung bei Inbetriebnahme oder bei Servicearbeiten ist in der Messeinheit und in der Kontrolleinheit eine Wechselvorrichtung eingebaut, mit der der Messempfänger und der Kontrollempfänger jeweils durch eine Justierlichtquelle getauscht werden können, sodass der wirksame Strahlquerschnitt der Kontrolllichtkeule und der Messlichtkeule für das menschliche Auge sichtbar ist. Die Justage ist aufwendig. Bei der Justage werden die Strahlquerschnitte auf einer Hintergrundwand des Raumes zur Deckung gebracht, indem sich das Messvolumen befindet. In jeder neuen Messsituation ist eine neue Justage erforderlich. Zudem ist der hohe Platzbedarf der Optik hinderlich, wenn durch eine Wandöffnung hindurch eine Messung vorgenommen werden muss. Schließlich müssen die Justierlichtquellen exakt auf Messempfänger und Kontrollempfänger ausgerichtet sein, was einen hohen Montageaufwand erfordert.

Davon ausgehend liegt der Erfindung die Aufgabe zugrunde, eine Streulichtmessung mit Kompensation von Hintergrundsignalen zu schaffen, die bei Messungen in einem umschlossenen Raum mit einer kleinen Wandöffnung auskommt und bei der eine Anpassung an verschiedene Abstände einer Hintergrundwand nicht erforderlich ist oder nur einen geringen Aufwand erfordert.

Die Aufgabe wird durch eine Vorrichtung mit den Merkmalen von Anspruch 1 gelöst. Vorteilhafte Ausgestaltungen der Erfindung sind in Unteransprüchen angegeben.

Die erfindungsgemäße Vorrichtung zur Messung von Streulicht aus einem Messvolumen unter Kompensation von Hintergrundsignalen umfasst

- mindestens einen Lichtsensor mit mindestens zwei getrennt auswertbaren lichtempfindlichen Elementen,
- ein einziges abbildendes optisches System, wobei die lichtempfindlichen Elemente in der Bildebene und das Messvolumen in der korrespondierenden Gegenstandsebene des optischen Systems angeordnet sind, die Sichtbereiche der lichtempfindlichen Elemente in der Gegenstandsebene komplett voneinander getrennt sind und hinter der Gegenstandsebene einander überlappen,
- einen Lichtsender mit einem kollimierten Lichtstrahl, der nur oder zumindest in stärkerem Maße den Sichtbereich des einen lichtempfindlichen Elements in einem durch die Gegenstandsebene erstreckten und das Messvolumen begrenzenden Bereich durchschneidet, sodass dieses lichtempfindliche Element Streulicht aus dem Messvolumen und Hintergrundlicht aus den überlappenden Sichtbereichen hinter der Gegenstandsebene erfasst und das andere lichtempfindliche Element kein oder deutlich weniger Streulicht aus dem Messvolumen und Hintergrundlicht aus den überlappenden Sichtbereichen hinter der Gegenstandsebene erfasst, und

- eine zwischen dem optischen System und den lichtempfindlichen Elementen angeordnete Blende, welche die Sichtbereiche der beiden lichtempfindlichen Elemente hinter der Gegenstandsebene so einschränkt, dass die einander nicht überlappenden Bereiche der beiden Sichtbereiche teilweise oder vollständig ausgeblendet werden.

Die erfindungsgemäße Vorrichtung setzt mindestens einen Lichtsensor mit zwei oder mehr lichtempfindlichen Elementen so ein, dass das eine lichtempfindliche Element Streulicht aus dem Messvolumen und Hintergrundlicht empfängt, während das andere lichtempfindliche Element kein oder deutlich weniger Streulicht und Hintergrundlicht empfängt. Dazu wird ein abbildendes optisches System so eingesetzt, dass die lichtempfindlichen Elemente in der Bildebene platziert sind, während sich das Messvolumen in der mit der Bildebene korrespondierenden Gegenstandsebene befindet. Während die beiden lichtempfindlichen Elemente in der Gegenstandsebene komplett separierte Sichtbereiche haben, überlappen sich die Sichtbereiche der beiden lichtempfindlichen Elemente hinter der Gegenstandsebene. Die Sichtbereiche hinter der Gegenstandsebene sind in einem weiteren Abstand von den lichtempfindlichen Elementen angeordnet als die Gegenstandsebene. Die Sichtbereiche der lichtempfindlichen Elemente überlappen sich insbesondere auf einer Hintergrundwand. Die beiden lichtempfindlichen Elemente erfassen in gleichem Maße Hintergrundlicht aus dem Überlappungsbereich der beiden Sichtbereiche, d.h. aus dem Bereich, in dem die beiden Sichtbereiche einander überlappen. Zur Angleichung der von den beiden lichtempfindlichen Elementen gelieferten Hintergrundsignale ist zwischen dem optischen System und den lichtempfindlichen Elementen eine Blende angeordnet, welche die Sichtbereiche der lichtempfindlichen Elemente hinter der Gegenstandsebene einschränkt. Durch die Blende werden die einander nicht überlappenden Bereiche der beiden Sichtbereiche teilweise oder vollständig ausgeblendet, sodass die beiden lichtempfindlichen Elemente verstärkt oder nur noch Hintergrundlicht aus den überlappenden Bereichen der beiden Sichtbereiche empfangen. Hierdurch können die von den beiden lichtempfindlichen Elementen gelieferten Hintergrundsignale besser aneinander angeglichen oder zur vollständigen Übereinstimmung gebracht werden. Infolgedessen ermöglicht die erfindungsgemäße Vorrichtung eine weitere Reduzierung oder Unterdrückung des Störeinflusses von Hintergrundstrahlung. Da die Vorrichtung nur ein einzelnes abbildendes optisches System für beide Messkanäle benötigt, kommt sie mit einer kleinen Wandöffnung aus und erfordert abhängig von der geforderten Güte der Hintergrundkorrektur keine Anpassung an verschiedene Abstände einer Hintergrundwand.

Der kollimierte Lichtstrahl, welcher über Rückwärtsstreuung das Messsignal erzeugt, wird von einem Lichtsender so ausgesendet, dass er nur oder zumindest in stärkerem Maße den durch das eine lichtempfindliche Element betrachteten Bereich insbesondere in der Gegenstandsebene durchschneidet und den Sichtbereich des anderen lichtempfindlichen Elements nicht oder nur in geringerem Maße durchschneidet. Der Bereich, in dem der Lichtstrahl den Sichtbereich des einen lichtempfindlichen Elements durchschneidet, begrenzt das Messvolumen.

Gemäß einer Ausgestaltung ist mit dem Lichtsensor eine Auswerteeinrichtung verbunden, die aus den Signalen, die von den lichtempfindlichen Elementen geliefert werden, die auf Streulicht aus dem Messvolumen beruhenden Messsignale ermittelt, wobei sie die auf Hintergrundlicht beruhenden Hintergrundsignale kompensiert. Die Kompensation der Hintergrundsignale erfolgt vorzugsweise dadurch, dass von den Signalen des einen lichtempfindlichen Elements die Signale des anderen lichtempfindlichen Elements abgezogen werden. Die Auswerteeinrichtung ist vorzugsweise eine analoge Auswerteelektronik oder eine elektronische Datenverarbeitungsanlage (z.B. ein PC).

Alternativ werden die Signale der lichtempfindlichen Elemente gespeichert und zu einem späteren Zeitpunkt ausgewertet. Vorzugsweise wird die Vorrichtung vom Hersteller mit einer Auswerteeinrichtung bereitgestellt. Alternativ stellt der Hersteller die Vorrichtung ohne Auswerteeinrichtung bereit und der Anwender ergänzt diese ggf. durch eine Auswerteeinrichtung.

Gemäß einer Ausgestaltung ist die Blende in der Bildebene einer Hintergrundwand angeordnet. Durch diese Anordnung wird erreicht, dass die Sichtbereiche der beiden lichtempfindlichen Elemente einander auf der Hintergrundwand exakt überlappen.

Gemäß einer anderen Ausgestaltung ist die Blende im bildseitigen Brennpunkt des optischen Systems angeordnet. Durch diese Ausgestaltung wird erreicht, dass die Sichtbereiche der beiden lichtempfindlichen Elemente einander im Unendlichen exakt überlappen. Diese Ausgestaltung liefert gegenüber einer Vorrichtung ohne Blende eine verbesserte Kompensation der Hintergrundsignale. Sie kann insbesondere für Messungen bei einer weit entfernten Hintergrundwand oder für Messungen ohne Justage der Optik verwendet werden.

Aus der bekannten Linsengleichung für optische Systeme folgt bei einer Brennweite f für die zu einer Gegenstandsweite G gehörende Bildweite B

$$B = \cfrac{1}{\cfrac{1}{f} - \cfrac{1}{G}}$$

Daraus ergeben sich abhängig von der Lage des Messvolumens $G_{MV}$ und der Hintergrundwand bei $G_{HG}$ die entsprechenden Bildweiten des Messvolumens $B_{MV}$ und der Hintergrundwand $B_{HG}$.

Abhängig von der Größe der lichtempfindlichen Elemente lässt sich die maximale Apertur der Blende aus der Bedingung, dass jeder Ort auf dem lichtempfindlichen Element den gleichen Öffnungswinkel hinsichtlich der Höhe des abbildenden Elements A aufweisen muss, berechnen.

Gemäß dieser Berechnung hat bei einer weiteren Ausgestaltung die Blende eine Apertur, die maximal den mit der nachfolgenden Formel bestimmten Wert aufweist:

$$h_{Blende} = -h_{Det} + \frac{B_{MV} - B_{HG}}{B_{MV}} \left( \frac{A}{2} + h_{Det} \right)$$

wobei folgendes gilt:

$h_{Blende}$ = maximale Höhe bzw. halbe Apertur der Blende
$h_{Det}$ = Höhe bzw. halber Durchmesser des Detektors
$B_{MV}$ = Bildweite des Messvolumens
$B_{HG}$ = Bildweite der Hintergrundwand
A = Durchmesser des abbildenden Systems.

Gemäß einer Ausgestaltung umfasst die Vorrichtung eine Blende mit einstellbarer Apertur und/oder Mittel zum Verlagern der Blende in Richtung der optischen Achse des optischen Systems. Dies ermöglicht eine Justage durch Verlagern und Variieren der Blende bei unterschiedlichen Abständen der Messvorrichtung von einer Hintergrundwand. Bei einer geeigneten Auswahl von Brennweite und Durchmesser des abbildenden optischen Elements sowie einem großen Abstand der Hintergrundwand in Relation zur Gegenstandsebene des Messbereichs ist jedoch eine solche Justage nicht notwendig. Vielmehr ist eine feste Einstellung der Blende für einen großen Bereich von Abständen der Hintergrundwand vom optischen System geeignet. Dies beruht auf der Verwendung eines einzelnen optischen Systems für beide Messkanäle, womit sich sehr flache Schnittwinkel im Bereich der Gegenstandsebenen ergeben.

Gemäß einer weiteren Ausgestaltung umfasst das optische System mindestens eine Linse oder einen Hohlspiegel. Vorzugsweise besteht das optische System aus mindestens einer Linse oder einem Hohlspiegel.

Gemäß einer weiteren Ausgestaltung umfasst der Lichtsender einen Laser und/oder eine LED.

Gemäß einer weiteren Ausgestaltung sind die lichtempfindlichen Elemente baulich in einem einzigen Lichtsensor ausgebildet, z.B. in einer segmentierten Photodiode. Gemäß einer anderen Ausgestaltung sind die lichtempfindlichen Elemente baulich in mehreren Lichtsensoren ausgebildet, z.B. in mehreren Photodioden. Ferner umfasst die Erfindung Ausgestaltungen, die mehr als zwei lichtempfindliche Elemente aufweisen, z.B. in einer segmentierten Photodiode oder in mehreren Photodioden oder in einem CMOS- oder in einem CCD-Sensor. Die lichtempfindlichen Elemente haben vorzugsweise ebene lichtempfindliche Flächen.

Gemäß einer Ausgestaltung ist der Lichtsender spitzwinklig zur optischen Achse des abbildenden optischen Systems ausgerichtet. Bei dieser Ausgestaltung kann die Vorrichtung durch eine einzige Wandöffnung auf das Messvolumen ausgerichtet werden. Gemäß einer weiteren Ausgestaltung ist der Lichtstrahl oder der Lichtsender seitlich neben dem optischen System angeordnet, vorzugsweise in einem kurzen Abstand vom optischen System. Bei einer weniger bevorzugten Ausführung sind abbildendes optisches System und Lichtsender räumlich voneinander getrennt, z.B. indem der Lichtsender senkrecht oder stumpfwinklig zur optischen Achse des abbildenden optischen Systems ausgerichtet ist.

Die Erfindung wird nachfolgend anhand der anliegenden Zeichnungen von bevorzugten Ausführungsbeispielen näher erläutert. In den Zeichnungen zeigen:

Fig. 1    eine herkömmliche Vorrichtung in einer grob schematischen Seitenansicht;

Fig. 2 ein bevorzugtes Ausführungsbeispiel der erfindungsgemäßen Vorrichtung mit Blende in der Bildebene einer Hintergrundwand in grob schematischer Seitenansicht;

Fig. 3 ein bevorzugtes Ausführungsbeispiel der erfindungsgemäßen Vorrichtung mit Blende im bildseitigen Brennpunkt des abbildenden optischen Systems in grob schematischer Seitenansicht;

Fig. 4 ein bevorzugtes Ausführungsbeispiel der erfindungsgemäßen Vorrichtung mit einem Hohlspiegel als abbildenden optischen Systems in einer grob schematischen teilweisen Seitenansicht;

Fig. 5 die Anordnung des Lichtsenders und den Verlauf des Lichtstrahls in der Messvorrichtung in einer grobschematischen Perspektivansicht.

Bei der nachfolgenden Erläuterung verschiedener Ausführungsbeispiele sind übereinstimmende oder im Wesentlichen übereinstimmende Bauteile und Einzelheiten des Strahlengangs mit übereinstimmenden Bezugsziffern versehen.

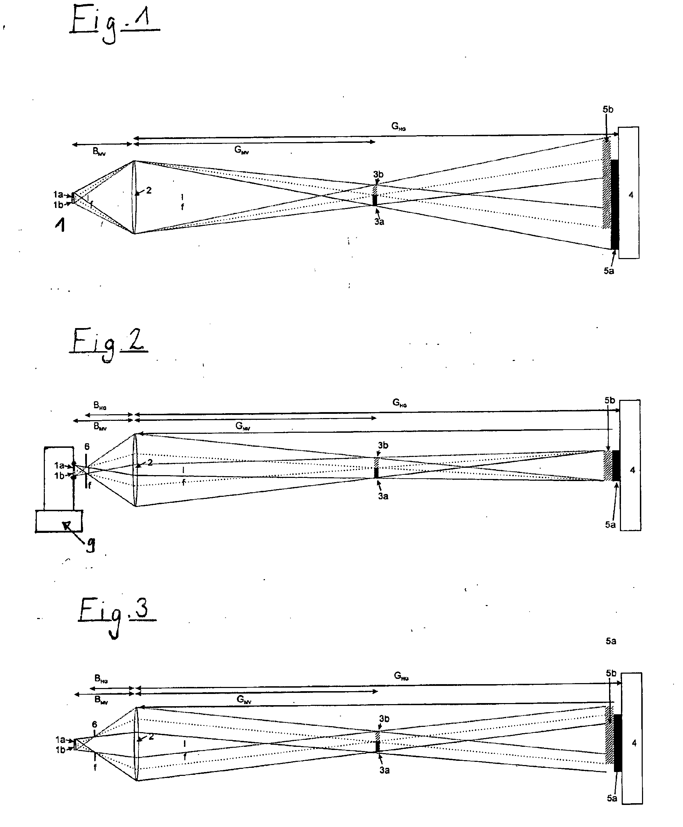

Gemäß Fig. 1 weist ein Lichtsensor 1 zwei oder mehr getrennt auswertbare lichtempfindliche Elemente 1a, 1b auf. Der segmentierte Lichtsensor 1 ist in der Bildebene eines abbildenden Systems 2 in Form einer bikonvexen Linse platziert. Das Messvolumen befindet sich in der korrespondierenden Gegenstandsebene.

Während in der Gegenstandsebene die Sichtfelder 3a, 3b der beiden lichtempfindlichen Elemente 1a, 1b komplett separiert sind, überlappen sich die Sichtbereiche außerhalb der Gegenstandsebene. Auf einer Hintergrundwand 4 überlappen sich die Sichtfelder 5a, 5b. Infolgedessen messen die lichtempfindlichen Elemente 1a,1b eine ähnliche, aber nicht die gleiche Hintergrundstrahlung.

Gemäß Fig. 2 wird eine Angleichung der Sichtbereiche 5a, 5b auf der Hintergrundwand 4 durch eine Blende 6 erreicht, die in der Bildebene der Hintergrundwand platziert ist. Durch diese Anordnung der Blende 6 überlappen die im Hintergrund abgebildeten Bereiche 5a, 5b exakt.

Fig. 3 zeigt einen Sonderfall, in dem die Hintergrundwand 4 im optisch gesehen Unendlichen angenommen wird. In diesem Fall ist die Blende 6 im bildseitigen Brennpunkt der Linse 2 platziert und die Strahlen, welche das Abbild auf der Wand definieren, verlaufen parallel.

Bei den Ausführungen von Fig. 2 und Fig. 3 kann das abbildende optische System sowohl aus einer Linse 2 als auch aus mehreren Linsen bestehen.

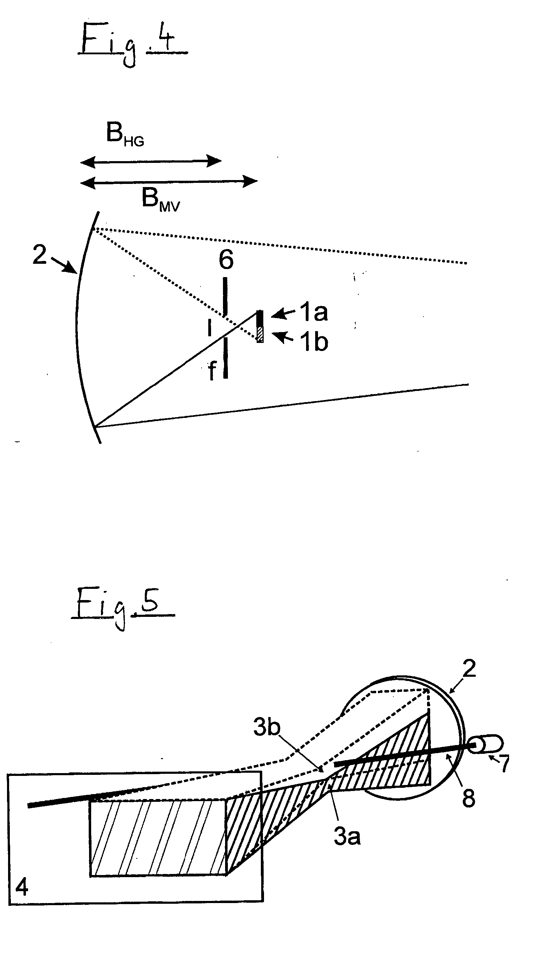

Bei der Ausführung von Fig. 4 ist das abbildende optische System als Hohlspiegel 2 realisiert. Bei dieser Ausführung befindet sich der Lichtsensor 1 mit den lichtempfindlichen Elementen 1a, 1b zwischen dem Hohlspiegel 2 und dem Messvolumen und befindet sich die Blende 6 zwischen dem Lichtsensor 1 und dem Hohlspiegel 2. In dem Beispiel ist die Blende 6 in der Bildebene der Hintergrundwand platziert. Im Übrigen ist bei dieser Ausführung der Strahlengang entsprechend Fig. 2. Vorteilhaft weist die Symmetrieachse des Hohlspiegels mit der optischen Achse des Systems einen kleinen Winkel auf, so dass die Blende 6 und die Elemente 1a, 1b das einfallende Licht nicht gegenüber dem Hohlspiegel 2 abschatten. Die Elemente 1a, 1b, 6 sind damit vor bzw. hinter der Zeichenebene von Fig.4 angeordnet.

Gemäß Fig. 5 sendet eine kollimierter Lichtsender 7 aus einer Position seitlich neben dem abbildenden optischen System 2 in einem spitzen Winkel zur optischen Achse des optischen Systems 2 einen Lichtstrahl 8 so aus, dass dieser in der Gegenstandsebene nur den von dem einen lichtempfindlichen Element 1b betrachteten Bereich 3b durchschneidet. Hingegen durchschneidet der Lichtstrahl 8 nicht den Bereich 3a, welcher von dem anderen lichtempfindlichen Element 1a betrachtet wird. Vor und hinter der Gegenstandsebene durchschneidet der Lichtstrahl nur den Sichtbereich des einen lichtempfindlichen Elements 1b. Der gesamte Bereich, in dem der Lichtstrahl 8 den Sichtbereich des einen lichtempfindlichen Elements 1b durchschneidet, begrenzt das Messvolumen.

Gemäß Fig. 2 ist eine Auswerteeinrichtung 9 an den Lichtsensor 1 angeschlossen, die aus den von den lichtempfindlichen Elementen 1a, 1b gelieferten Signalen das auf Streulicht beruhende Messsignal ermittelt, indem sie das Hintergrundsignal kompensiert.


**Patentansprüche**

**1.** Vorrichtung zur Messung von Streulicht aus einem Messvolumen unter Kompensation von Hintergrundsignalen umfassend

• mindestens einen Lichtsensor (1) mit mindestens zwei getrennt auswertbaren lichtempfindlichen Elementen (1a, 1b),
• ein einziges abbildendes optisches System (2), wobei die lichtempfindlichen Elemente (1a, 1b) in der Bildebene und das Messvolumen in der korrespondierenden Gegenstandsebene des optischen Systems (2) angeordnet sind, die Sichtbereiche der lichtempfindlichen Elemente (1a, 1b) in der Gegenstandsebene komplett voneinander getrennt sind und hinter der Gegenstandsebene einander überlappen,
• einen Lichtsender (7) mit einem kollimierten Lichtstrahl (8), der nur oder zumindest in stärkerem Maße den Sichtbereich des einen lichtempfindlichen Elements (1b) in einem durch die Gegenstandsebene erstreckten und das Messvolumen begrenzenden Bereich (3b) durchschneidet, sodass dieses lichtempfindliche Element (1b) Streulicht aus dem Messvolumen und Hintergrundlicht aus den überlappenden Sichtbereichen hinter der Gegenstandsebene erfasst und das andere lichtempfindliche Element (1a) kein oder deutlich weniger Streulicht aus dem Messvolumen und Hintergrundlicht aus den überlappenden Sichtbereichen hinter der Gegenstandsebene erfasst, **dadurch gekennzeichnet, dass** die Vorrichtung
• eine zwischen dem optischen System (2) und den lichtempfindlichen Elementen (1a,1b) angeordneten Blende (6) umfasst, welche die Sichtbereiche der lichtempfindlichen Elemente (1a, 1b) hinter der Gegenstandsebene
• so einschränkt, dass die einander nicht überlappenden Bereiche der beiden Sichtbereiche teilweise oder vollständig ausgeblendet werden.

2.  Vorrichtung nach Anspruch 1, bei der der Lichtsender (7) so ausgerichtet ist, dass der Lichtstrahl (8) nur den Sichtbereich des einen lichtempfindlichen Elements (1b) durchschneidet.

3.  Vorrichtung nach Anspruch 1 oder 2, bei der die Blende (6) die Sichtbereiche der lichtempfindlichen Elemente (1a, 1b) auf den Überlappungsbereich der beiden Sichtbereiche einschränkt, sodass die beiden lichtempfindlichen Elemente (1a, 1b) in gleichem Maße Hintergrundlicht erfassen.

4.  Vorrichtung nach einem der Ansprüche 1 bis 3, mit einer mit dem mindestens einen Lichtsensor (1) verbundenen Auswerteeinrichtung (9), die aus den Messsignalen, die von den lichtempfindlichen Elementen (1a, 1b) geliefert werden, die auf Streulicht aus dem Messvolumen beruhenden Anteile ermittelt, wobei sie die auf Hintergrundlicht beruhenden Anteile kompensiert.

5.  Vorrichtung nach einem der Ansprüche 1 bis 4, bei der die Blende (6) in der Bildebene einer Hintergrundwand (4) angeordnet ist.

6.  Vorrichtung nach einem der Ansprüche 1 bis 4, bei der die Blende (6) im bildseitigen Brennpunkt des optischen Systems (2) angeordnet ist.

7.  Vorrichtung nach einem der Ansprüche 1 bis 6, bei der die Blende (6) eine Apertur hat, die maximal den mit der nachfolgenden Formel bestimmten Wert aufweist:

$$h_{Blende} = -h_{Det} + \frac{B_{MV} - B_{HG}}{B_{MV}} \left( \frac{A}{2} + h_{Det} \right)$$

wobei folgendes gilt:

$h_{Blende}$ = maximale Höhe bzw. halbe Apertur der Blende
$h_{Det}$ Höhe bzw. halber Durchmesser des Detektors
$B_{MV}$ = Bildweite des Messvolumens
$B_{HG}$ = Bildweite der Hintergrundwand
$A$ = Durchmesser des abbildenden Systems.

8.  Vorrichtung nach einem der Ansprüche 1 bis 7 umfassend eine Blende (6) mit einstellbarer Apertur und/oder Mittel zum Verlagern der Blende in Richtung der optischen Achse des optischen Systems (2).

9.  Vorrichtung nach einem der Ansprüche 1 bis 8, bei der das optische System (2) eine Linse oder einen Hohlspiegel umfasst.

10. Vorrichtung nach einem der Ansprüche 1 bis 9, bei der der Lichtsender (7) einen Laser und/oder eine LED umfasst.

11. Vorrichtung nach einem der Ansprüche 1 bis 10, bei der die lichtempfindlichen Elemente (1a, 1b) in einem einzigen Lichtsensor (1) ausgebildet sind.

12. Vorrichtung nach einem der Ansprüche 1 bis 10, bei der die lichtempfindlichen Elemente (1a, 1b) in verschiedenen Lichtsensoren (1) ausgebildet sind.

13. Vorrichtung nach einem der Ansprüche 1 bis 12, bei der der Lichtsender (7) spitzwinklig zur optischen Achse des abbildenden optischen Systems (2) ausgerichtet ist.

14. Vorrichtung nach Anspruch 13, bei dem der Lichtsender (7) oder der Lichtstrahl (8) seitlich neben dem optischen System (2) angeordnet ist.

**Claims**

1. A device for measuring scattered light from a measurement volume with compensation for background signals, comprising

   • at least one light sensor (l) having at least two separately evaluable light-sensitive elements (1a, 1b),
   • a single imaging optical system (2), wherein the light-sensitive elements (1a, 1b) are arranged in the image plane and the measurement volume is arranged in the corresponding object plane of the optical system (2), the visual ranges of the light-sensitive elements (1a, 1b) are completely separate from each other in the object plane and overlap each other behind the object plane,
   • a light transmitter (7) with a collimated light beam (8), which only passes through, or at least primarily passes through, the visual range of the one light-sensitive element (1b) within an area (3b) extending through the object plane and bordering the measured volume such that this light-sensitive element (1b) detects scattered light from the measurement volume and background light from the overlapping visual ranges behind the subject plane, and the other light-sensitive element (1a) detects no or significantly less scattered light from the measurement volume and background light from the overlapping visual areas behind the object plane, **characterized in that** the device
   • comprises a diaphragm (6) that is arranged between the optical system (2) and the light-sensitive elements (1a, 1b) and that restricts the visual ranges of the light-sensitive elements (1a, 1b) behind the object plane
   • such that the areas of the two visual ranges which do not overlap each other are partially or completely hidden.

2. The device according to claim 1, wherein the light transmitter (7) is aligned such that the light beam (8) only passes through the visual range of the one light-sensitive element (1b).

3. The device according to claim 1 or 2, wherein the diaphragm (6) restricts the visual range of the light-sensitive elements (1a, 1b) to the overlapping area of the two visual ranges such that the two light-sensitive elements (1a, 1b) detect background light to the same degree.

4. The device according to one of claims 1 to 3 with an evaluation device (9) that is connected to the at least one light sensor (1) and that detects the amount of the measurement signals supplied from the light-sensitive elements (1a, 1b) that originates from the measured volume, wherein the evaluation device compensates for the amount originating from the background light.

5. The device according to one of the claims 1 to 4, wherein the diaphragm (6) is arranged in the image plane of a background wall (4).

6. The device according to one of the claims 1 to 4, wherein the diaphragm (6) is arranged in the image side focal point of the optical system (2).

7. The device according to one of the claims I to 6, wherein the diaphragm (6) has an aperture that has at most the value calculated according to the following formula:

$$h_{Blende} = -h_{Det} + \frac{B_{MV} - B_{HG}}{B_{MV}}\left(\frac{A}{2} + h_{Det}\right)$$

wherein the following holds true:

$h_{Blende/Diaphragm}$ = maximum height or half aperture of the diaphragm
$h_{Det}$ = height or half diameter of the detector
$B_{MV}$ = image distance of the measurement volume
$B_{BW}$ = image distance of the background wall
A = Diameter of the imaging system.

**8.** The device according to one of the claims 1 to 7, comprising a diaphragm ( 6) with an adjustable aperture and/or means for displacing the diaphragm toward the optical axis of the optical system (2).

**9.** The device according to one of the claims 1 to 8, wherein the optical system (2) comprises a lens or concave mirror.

**10.** The device according to one of the claims I to 9, wherein the light transmitter (7) comprises a laser and/or LED.

**11.** The device according to one of the claims 1 to 10, wherein the light-sensitive elements (1a, 1b) are formed in a single light sensor (1).

**12.** The device according to one of the claims 1 to 10, wherein the light-sensitive elements (1a, 1b) are formed in different light sensors (1).

**13.** The device according to one of the claims 1 to 12, wherein the light transmitter (7) is aligned at a sharp angle relative to the optical axis of the imaging optical system (2).

**14.** The device according to claim 13, wherein the light transmitter (7) or the light beam (8) is arranged on the side next to the optical system (2).

**Revendications**

**1.** Dispositif de mesure de la lumière diffusée à partir d'un volume de mesure en compensant les signaux d'arrière-plan, comportant

• au moins un capteur de lumière (1) avec au moins deux éléments sensibles à la lumière (1a, 1b) susceptibles d'être évalués séparément,
• un seul système optique d'imagerie (2), les éléments sensibles à la lumière (1a, 1b) étant agencés dans le plan d'image et le volume de mesure dans le plan d'objet correspondant du système optique (2), les zones de visibilité des éléments sensibles à la lumière (1a, 1b) étant complètement séparées les unes des autres dans le plan d'objet et superposées entre elles derrière le plan d'objet,
• un émetteur de lumière (7) avec un faisceau lumineux collimaté (8) coupant seulement ou au moins dans une plus large mesure la zone de visibilité de l'élément sensible à la lumière (1b) dans une zone (3b) délimitant le volume de mesure et s'étendant à travers le plan d'objet, de telle façon que cet élément sensible à la lumière (1b) capte une lumière diffusée à partir du volume de mesure et une lumière d'arrière-plan à partir des zones de visibilité superposées derrière le plan d'objet, et que l'autre élément sensible à la lumière (1a) ne détecte aucune ou nettement moins de lumière diffusée à partir du volume de mesure et de lumière d'arrière-plan à partir des zones de visibilité derrière le plan d'objet, **caractérisé en ce que** le dispositif
• comporte un diaphragme (6) agencé entre le système optique (2) et les éléments sensibles à la lumière (1a, 1b), lequel restreint les zones de visibilité des éléments sensibles à la lumière (1a, 1b) derrière le plan d'objet de telle façon que
• les zones non superposées des deux zones de visibilité sont partiellement ou complètement masquées.

**2.** Dispositif selon la revendication 1, dans lequel l'émetteur de lumière (7) est orienté de manière à ce que le faisceau lumineux (8) ne coupe que la zone de visibilité de l'un des éléments sensibles à la lumière (1b).

**3.** Dispositif selon la revendication 1 ou 2, dans lequel le diaphragme (6) restreint les zones de visibilité des éléments sensibles à la lumière (1a, 1b) à la zone de superposition des deux zones de visibilité, de telle façon que les deux éléments sensibles à la lumière (1a, 1b) captent de la lumière d'arrière-plan dans la même mesure.

4. Dispositif selon l'une des revendications 1 à 3, avec un dispositif d'évaluation (9) relié à au moins un capteur de lumière (1) détectant les parts dues à la lumière diffusée à partir du volume de mesure, à partir des signaux de mesure fournis par les éléments sensibles à la lumière (1a, 1b), tout en compensant les parts dues à la lumière d'arrière-plan.

5. Dispositif selon l'une des revendications 1 à 4, dans lequel le diaphragme (6) est agencé dans le plan d'image d'un mur d'arrière-plan (4).

6. Dispositif selon l'une des revendications 1 à 6, dans lequel le diaphragme (6) est agencé dans le point focal côté image du système optique (2).

7. Dispositif selon l'une des revendications 1 à 6, dans lequel le diaphragme (6) présente une ouverture présentant au maximum la valeur déterminée avec la formule suivante :

$$h_{Blende} = -h_{Det} + \frac{B_{MV} - B_{HG}}{B_{MV}}\left(\frac{A}{2} + h_{Det}\right)$$

dans laquelle :

$h_{Blende}/_{diaphragme}$ = hauteur maximale ou moitié d'ouverture du diaphragme $h_{Det}$ = hauteur ou moitié de diamètre du détecteur
$B_{MV}$ = distance d'image du volume de mesure
$B_{HG}$ = distance d'image du mur d'arrière-plan
A = diamètre du système d'imagerie.

8. Dispositif selon l'une des revendications 1 à 7, comportant un diaphragme (6) avec une ouverture réglable et/ou des moyens permettant de déplacer le diaphragme dans la direction de l'axe optique du système optique (2).

9. Dispositif selon l'une des revendications 1 à 8, dans lequel le système optique (2) comporte une lentille ou un miroir concave.

10. Dispositif selon l'une des revendications 1 à 9, dans lequel l'émetteur de lumière (7) comporte un laser et/ou une DEL.

11. Dispositif selon l'une des revendications 1 à 10, dans lequel les éléments sensibles à la lumière (1a, 1b) sont formés dans un seul capteur de lumière (1).

12. Dispositif selon l'une des revendications 1 à 10, dans lequel les éléments sensibles à la lumière (1a, 1b) sont formés dans différents capteurs de lumière (1).

13. Dispositif selon l'une des revendications 1 à 12, dans lequel l'émetteur de lumière (7) est orienté selon un angle aigu par rapport à l'axe optique du système optique d'imagerie (2).

14. Dispositif selon la revendication 13, dans lequel l'émetteur de lumière (7) ou le faisceau lumineux (8) est agencé latéralement à côté du système optique (2).

Fig. 1

Fig. 2

Fig. 3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2754139 A1
- CH 600456

- EP 1983328 B1